# EUROPEAN PATENT APPLICATION

(11) **EP 4 576 452 A1**
(43) Date of publication of application: **25.06.2025**
(21) Application number: 23218612.2
(22) Date of filing: 20.12.2023
(51) Int. Cl.: H01S 3/131, H01S 3/067, H01S 3/1118, H01S 3/13

(54) **LASER SYSTEM FOR STABILIZING LASER EMISSION**

(71) Applicant: NKT Photonics A/S, 3460 Birkerød (DK)
(72) Inventor: MARTY, Patrick, 8105 Regensdorf (CH)
(74) Representative: Zacco Denmark A/S

(57) **Abstract**

The present disclosure relates to a laser system comprising: a cavity (1) comprising a gain medium (2) configured to generate laser emission in the form of laser pulses, each having a pulse bandwidth and pulse power; a pump source (3) configured to optically pump the gain medium in the cavity; a photodetector (4) located outside the cavity, the photodetector configured to monitor the laser emission from the cavity and provide a feedback signal to the pump source; and an optical filter (5) located outside the cavity, wherein the optical filter is arranged in optical communication with the photodetector and configured to filter out a predefined range of wavelengths in order to stabilize one or more properties of the laser emission, in particular to stabilize the pulse bandwidth, pulse duration and/or pulse power.

## Description

### Technical field

The present disclosure relates to a laser system. In particular, the present disclosure relates to a laser system comprising an optical filter outside the cavity of the laser system. The disclosure further relates to an ultra-fast fiber laser system for generating short laser pulses in the femtosecond or picosecond range.

### Background

Some laser systems are required to operate for long periods of time or at varying temperatures. Existing laser systems sometimes suffer from negative effects caused by changes in the temperature of the laser system. In some cases, thermal effects cause the emission from the laser system to change.

As an example, for a pulsed laser system emitting a train of laser pulses, each laser pulse having a pulse amplitude and a pulse bandwidth, the amplitude and/or bandwidth may change with temperature. The change in pulse bandwidth may cause the pulse duration to change in some modes or operations of the laser system. This is undesired for many applications, such as in cutting applications, where it is important to have pulses with well-defined properties, e.g. in terms of power, bandwidth, energy, and/or pulse duration.

It is desired to obtain an improved laser system that is able to stabilize one or more properties of the laser emission.

### Summary

Laser emission from a laser system may depend on the operating temperature of the laser system. Any changes in the properties of the laser emission due to thermal effects are typically undesired. The present inventor has realized that an optical filter, such as an optical bandpass filter, can be utilized to mitigate these thermal effects and thereby also stabilize the laser emission in terms of a variety of parameters, such as pulse power, pulse duration and/or pulse bandwidth.

In particular, it has been observed that in case the laser system is operated in a constant power mode, wherein the output pulse power output is constant, then temperature variations can cause the amplitude of the pulse(s) to change. A consequence hereof is that the pulse bandwidth changes to maintain a constant pulse power. As mentioned above and herein, these changes in pulse properties are undesired for some applications.

The above-mentioned challenges are solved by providing a laser system comprising: a cavity comprising a gain medium configured to generate laser emission in the form of laser pulses, each having a pulse bandwidth and pulse power; a pump source configured to optically pump the gain medium in the cavity; a photodetector located outside the cavity, the photodetector configured to monitor the laser emission from the cavity and provide a feedback signal to the pump source; and an optical filter located outside the cavity, wherein the optical filter is arranged in optical communication with the photodetector and configured to filter out a predefined range of wavelengths in order to stabilize one or more properties of the laser emission. The one or more properties may be selected from the group of: pulse bandwidth, pulse duration, pulse power, and/or combinations thereof.

In some embodiments, the laser system is an ultra-fast fiber laser system for generating short laser pulses in the femtosecond or picosecond range, wherein the ultra-fast fiber laser system comprises the optical filter disclosed herein.

### Brief description of the drawings

Fig. 1 shows an embodiment of a laser system according to the present disclosure.
Fig. 2 shows another embodiment of a laser system according to the present disclosure, said embodiment comprising some additional components to the system shown in figure 1.
Fig. 3 shows experimental data related to a laser system with an architecture shown in figures 1 or 2 excluding the optical filter.
Fig. 4 shows a similar experiment and setup as described in relation to figure 3, with the difference that the laser system includes the optical filter.
Fig 5. shows a similar experiment and setup as described in relation to figure 3, with the difference that the pulse repetition frequency was set to 2 MHz.
Fig. 6 shows a similar experiment and setup as described in relation to figure 5, with the difference that the laser system includes the optical filter.
Fig. 7 shows a plot of the spectral density of a laser pulse versus the wavelength of the laser pulse. The plot shows a plurality of graphs or traces corresponding to different temperatures.

### Detailed description

The laser system may comprise a cavity, said cavity comprising a gain medium configured to generate laser emission. The cavity may be understood as a laser cavity or a laser resonator. The laser emission may be in the form of laser pulses. The laser pulses may be described in terms of amplitude, energy, power, bandwidth, and/or combinations thereof. In particular, each laser pulse in the laser emission may have a certain pulse bandwidth and pulse power. In this disclosure, the terms pulse bandwidth, pulse width, and spectral width of a pulse, are used interchangeably.

The gain medium may be a medium which can amplify the power of light to compensate for losses in the cavity. Thus, the gain medium may be suitable for adding energy to the amplified light in the laser cavity. The gain medium may comprise one or more active fibers. An active fiber may be understood as an optical fiber which has one or more laser-active dopants in the fiber core. As an example, the active fiber may be a rare-earth-doped fiber, wherein the fiber is doped with a rare-earth element. In some embodiments, the gain medium comprises a rare-earth doped fiber with a dopant selected from the group of ytterbium, erbium, or thulium.

In some embodiments, the active fiber is a single-mode fiber or a few-mode fiber. In other embodiments, the active fiber is a large mode area fiber or a polarization-maintaining fiber. The cavity may comprise a plurality of optical fibers, of which only one or more of said fibers are active fibers. In preferred embodiments, the cavity comprises a plurality of polarization-maintaining (PM) optical fibers.

The cavity may be defined by two ends, wherein a first reflector is located at a first end of the cavity, and a second reflector is located at a second end of the cavity. As an example, a fiber Bragg grating (FBG) may be located at a first end of the cavity, and a semiconductor saturable-absorber mirror (SESAM) may be located at a second end of the cavity, opposite to the first end. The cavity may alternatively be defined by other optical components, such as dielectric mirrors, dichroic mirrors, reflectors, distributed Bragg reflectors (DBRs), FBGs, saturable absorber mirrors, SESAMs, and/or combinations thereof. One end of the cavity may be provided with a component configured as an output coupler. The output coupler may have a significant transmission for the laser emission, whereas the component at the opposite end may be highly reflecting. The cavity may be a linear cavity and/or a fiber laser cavity. A linear cavity may also be referred to as a standing-wave cavity or a standing-wave resonator. Alternatively, the cavity may be a ring cavity, where the light can do round trips in two different directions in the cavity. The cavity may further comprise one or more extension optical fibers for extending the cavity length.

The laser system may comprise a pump source. The pump source may be selected from the group of: laser diodes, fiber-coupled diode lasers, or fiber lasers. The pump source may be configured to emit and deliver an optical signal to the cavity. In particular, the pump source may be configured to optically pump the gain medium in the cavity. This may be achieved by providing a wavelength that matches one or more absorption bands of the dopants in the gain medium.

In some embodiments, the pump source is configured to emit a central wavelength in the range of 900 nm to 1000 nm, such as in the range 910 nm to 980 nm. As an example, the pump source may be configured to emit a wavelength suitable for optically pumping an Ytterbium-based laser. The two primary pump wavelengths for ytterbium lasers are around 915 nm and 976 nm, since these wavelengths correspond to the energy levels of ytterbium ions in the laser gain medium.

In some embodiments, the pump source is configured to emit a central wavelength in the range of 750 nm to 800 nm, or in the range of 1700 nm to 1800 nm. As an example, the pump source may be configured to emit a wavelength suitable for optically pumping a Thulium-based laser. The two primary pump wavelengths for thulium lasers are around 785 nm and 1750 nm since these wavelengths correspond to the energy levels of thulium ions in the laser gain medium.

The laser system may further comprise a wavelength division multiplexer (WDM) arranged between the pump source and the cavity. The WDM may be configured to split one or more first optical channels to two or more second optical channels. Alternatively, it may be configured to combine two or more first optical channels to one or more second optical channels. In some embodiments, the WDM is connected to the pump source via an optical fiber, and the WDM is further configured to split the optical signal from the pump source in two different optical channels, such as in two different optical fibers. The WDM may be further configured to deliver the optical signal from the pump source to the laser cavity via one of said optical channels. The other optical channel may comprise an optical fiber, an optical isolator, and a fiber cable termination, such as a fiber optic pigtail.

The laser system may comprise a photodetector located external to the cavity. In some embodiments, the photodetector is selected from the group of: semiconductor diodes, photodiodes, photodiode arrays, and photomultiplier tubes. The photodetector may be configured to monitor the laser emission from the cavity and provide a feedback signal to the pump source. The laser system may be configured to adjust the current and/or power of the pump source based on the feedback signal, whereby the pulse bandwidth, pulse duration, and/or pulse power of the laser emission is adjusted and/or stabilized. Thus, by adjusting the current to the pump source in response to the feedback signal, the pulse bandwidth of the laser pulses can be stabilized at least to a greater degree than without the optical filter. The laser system may further comprise a proportional-integral-derivative (PID) controller arranged in a feedback loop with the photodetector and the pump source.

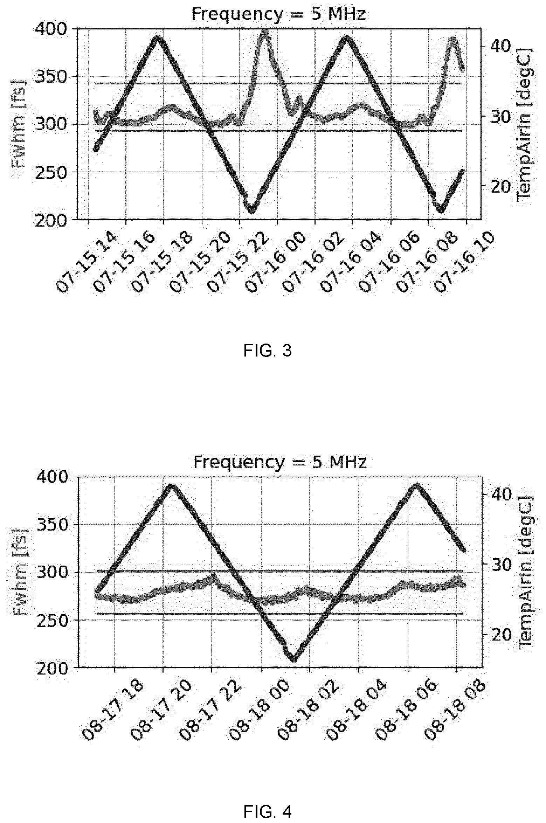

The laser system may comprise an optical filter located external to the cavity. The optical filter may be arranged in combination with the photodetector and configured to filter out a predefined range of wavelengths. Specifically, the optical filter may be placed in optical communication with the photodetector. As an example, the output from the optical filter may be connected to the input of the photodetector. The two components may be connected via an optical fiber. Similarly, the optical filter may be connected to a coupler in the cavity via an optical fiber. The present inventor has realized that an optical filter in such an arrangement is particularly useful for stabilizing one or more properties related to the laser emission, such as the pulse bandwidth, the pulse duration, the pulse power, and/or combinations thereof. The optical filter may be selected from the group of: band-pass filters, long-pass filters, or short-pass filters. In preferred embodiments, the optical filter is an optical band-pass filter (BPF). The optical filter may be arranged between the cavity and the photodetector to filter the optical signal provided to the photodetector. In this way, the monitoring of the laser emission is more sensitive to changes in the bandwidth of the laser pulses. The optical filter thus ensures a more stable monitoring of the laser emission. Without the optical filter, the monitored signal becomes more noisy and the feedback signal is not able to efficiently correct the changes due to thermal effects. Thus, the optical filter in combination with the photodetector ensures a more efficient monitoring of the laser emission and feedback, and it further ensures stabilized laser pulses in terms of e.g. pulse bandwidth. This is evident from the experimental data shown in figures 3 to 6.

In some embodiments, the optical filter has a bandwidth in the range of 1 nm to 10 nm, such as 2 nm to 6 nm, such as a bandwidth of about 4 nm. Generally, the optical filter may be configured to allow light of wavelengths within said bandwidth to pass through the filter. Furthermore, the optical filter may have a center wavelength in the range of 1030 nm to 1050 nm, such as about 1038 nm. Thus, the optical filter may allow light having a similar wavelength as the center wavelength of the filter to pass through the filter. The bandwidth of the filter may be centered around said center wavelength.

The laser system may be an ultra-fast fiber laser system for generating short laser pulses in the femtosecond or picosecond range. As an example, the laser system may be a medical-grade femtosecond fiber laser. The laser system may be suitable for applications such as optogenetics, ophthalmology, medical device manufacturing, and material processing.

The laser system may be configured to generate and output a train of laser pulses. The laser pulses may be generated by mode-locking or Q-switching. As an example, the laser emission may be in the form of ultrashort pulses, such as mode-locked ultrashort pulses. The laser system may be a mode locked fiber laser system. In some embodiments, the laser pulses have a pulse duration in the range of femtoseconds or picoseconds. As an example, the laser pulses may be ultrashort pulses having a pulse duration from about 10 fs to about 1 ps, such as from about 50 fs to about 500 fs. The average power output from the laser system may be more than 1 W, such as more than 5 W, such as more than 10 W. The pulse energy of each laser pulse may be more than 1 µJ, such as more than 10 µJ, such as more than 20 µJ.

The laser system may be configured to output the laser pulses at a pulse repetition rate from about 0.5 MHz to about 20 MHz, such as from about 1 MHz to about 10 MHz. The laser pulses may have a spectral width in the range from about 10 nm to about 16 nm. The laser pulses may have a central wavelength from about 1025 nm to about 1050 nm, such as about 1030 nm. In some embodiments, the laser emission has a central wavelength in the range of 1030 nm to 1120 nm. In other embodiments, the laser emission has a central wavelength in the range of 1530 nm to 1550 nm. In other embodiments, the laser emission has a central wavelength in the range of 2010 nm to 2080 nm.

### Detailed description of the drawings

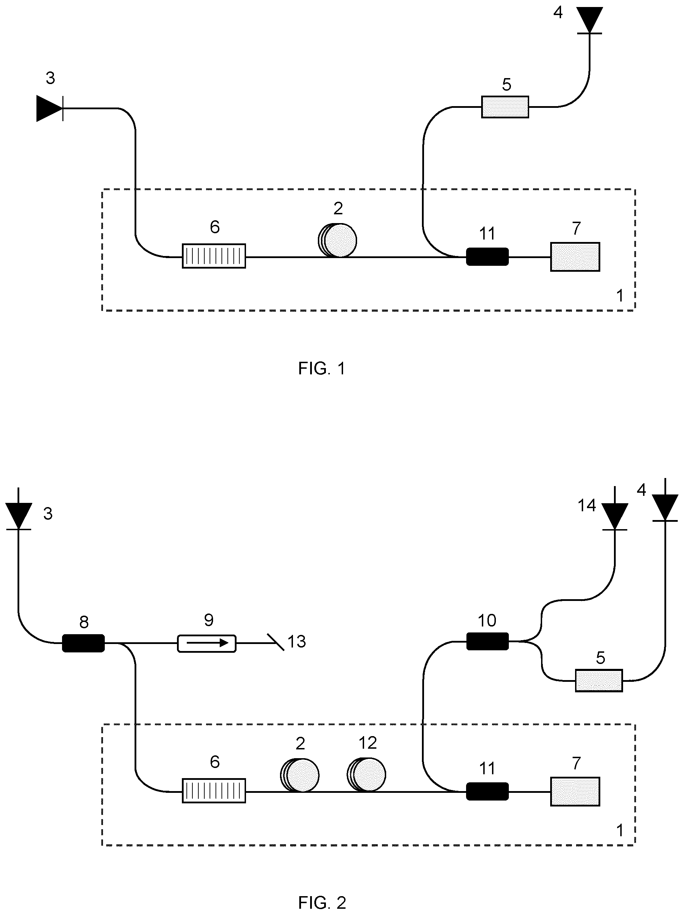

Fig. 1 shows an embodiment of a laser system according to the present disclosure. In this embodiment, the laser system comprises a cavity **1** comprising a gain medium **2** configured to generate laser emission in the form of laser pulses, a pump source **3** configured to optically pump the gain medium **2** in the cavity **1,** a photodetector **4** located external to the cavity **1,** the photodetector **4** configured to monitor the laser emission from the cavity **1** and provide a feedback signal to the pump source **3;** and an optical filter **5** located external to the cavity **1,** wherein the optical filter **5** is arranged in combination with the photodetector **4** and configured to filter out a predefined range of wavelengths in order to stabilize the pulse bandwidth, the pulse duration and/or the pulse power of the laser emission. In this embodiment, the optical filter is placed in optical communication with the photodetector via an optical fiber. Furthermore, in this embodiment, the cavity is a linear cavity, wherein the cavity comprises a fiber Bragg grating (FBG) **6** located at a first end of the cavity, and a semiconductor saturable-absorber mirror (SESAM) **7** located at a second end of the cavity, opposite to the first end. As an alternative to using an FBG and a SESAM, other types of reflectors, mirrors, or saturable absorber mirrors may be utilized. The embodiment may further comprise a coupler **11,** such as a fiber optic coupler, for coupling out at least some light from the cavity **1.** The coupler **11** may be optically connected to the photodetector **4** via the optical filter **5,** such that light from the cavity **1** can be monitored by the photodetector **4.**

Fig. 2 shows another embodiment of a laser system according to the present disclosure. In this embodiment, the laser system comprises some additional components in addition to the components mentioned in relation to figure 1. In this embodiment, the laser system further comprises an extension optical fiber **12** in the cavity **1** for defining the cavity length, an optical isolator **9** for allowing light to propagate through it in one direction but not in the opposite direction, and a fiber cable termination **13,** such as a fiber optic pigtail. In this embodiment, the laser system further comprises a wavelength division multiplexer (WDM) **8** arranged between the pump source **3** and the cavity **1,** wherein the WDM **8** is configured to split the optical signal from the pump source **3** in two separate optical fibers, wherein a first optical fiber is connected to the fiber cable termination **13** via the optical isolator **9** and a second optical fiber is connected to the cavity **1.** In this embodiment, the laser system further comprises a second photodetector **14,** such as a photodiode, and a coupler **10,** such as a fiber optic coupler, for coupling or splitting a first optical signal from an optical fiber into two separate optical fibers. Thus, in this embodiment, the laser system comprises a first photodetector **4** for monitoring at least a part of the laser emission from the cavity **1** via the optical filter **5,** and a second photodetector **14** for monitoring the laser emission without filtration of the light. The coupler **10** may be a fiber optic coupler configured to split the light coupled out from the cavity in two equal signals, such that the coupler provides a 50:50 ratio.

Fig. 3 shows experimental data related to a laser system with an architecture shown in figure 1 or 2 but without the optical filter **5.** The laser system may be a femtosecond fiber laser configured to deliver ultra-short femtosecond pulses. For this experiment, the laser cavity was placed in a thermal chamber for controlling the air temperature surrounding the laser cavity. The figure shows two graphs: a first graph (blue) having a sawtooth profile, which is the air temperature inside the thermal chamber (values on right y-axis), which was ramped up and down over time during the experiment, and a second graph (red) showing the pulse duration measured in terms of full width at half maximum (FWHM) of a given laser pulse output by the laser system as monitored by a photodetector **14** outside the cavity, with no optical filter placed in front of the photodetector. For this experiment, the pulse repetition frequency was 5 MHz. The x-axis shows the time in terms of time stamps, which are similar to both graphs. It is observed that the FWHM changes with temperature. In particular, there are some larger peaks in pulse duration when the temperature is near a minimum. These peaks are undesirable, and thus it is an object of the presently disclosed laser system to minimize or ideally entirely remove said peaks. Ideally, the pulse duration in terms of FWHM should be substantially constant with varying temperature, or at least vary minimally.

Fig. 4 shows experimental data related to a laser system with an architecture shown in figure 1 or 2 including the optical filter **5.** The laser system may be a femtosecond fiber laser configured to deliver ultra-short femtosecond pulses. The experiment performed is identical to the experiment described in relation to figure 3, apart from the inclusion of the optical filter in front of the photodetector **4.** Thus, the laser system shares the same components as the one described in relation to figure 3, with the addition of the optical filter **5.** Also, the temperature was varied in the same range and the pulse repetition frequency of the laser emission was the same in both experiments. It is observed that the optical filter has the advantage of minimizing the aforementioned peaks in the pulse duration (FWHM). Accordingly, the optical filter has the technical effect of stabilizing the pulse duration and/or the pulse bandwidth with varying temperatures. It is seen that the pulse duration varies in a narrower range without the larger peaks observed without the filter, cf. figure 3.

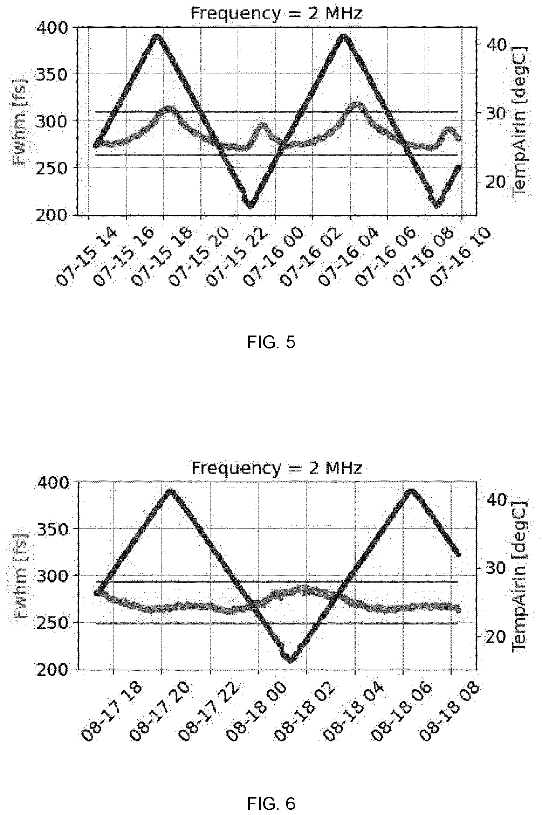

Fig 5. shows a similar experiment and setup as described in relation to figure 3, with the difference that the pulse repetition frequency was set to 2 MHz. For this experiment, the laser system did not include the optical filter in front of the photodetector. Once again, a number of undesired peaks are observed in the laser pulse duration (FWHM). In particular, the peaks appear to correlate roughly with the extrema of the temperature. It is an object of the presently disclosed laser system to remove or minimize said peaks, corresponding to stabilizing the pulse duration (FWHM) of the emitted laser pulses.

Fig. 6 shows a similar experiment and setup as described in relation to figure 5, with the difference that the laser system includes the optical filter **5** placed between the cavity and the photodetector **4.** For this experiment, the pulse repetition frequency was set to 2 MHz similar to the experiment shown in figure 5. The inclusion of the optical filter is seen to minimize the peaks present in figure 5. Accordingly, the optical filter has the technical effect of stabilizing the pulse duration and/or the pulse bandwidth with varying temperatures.

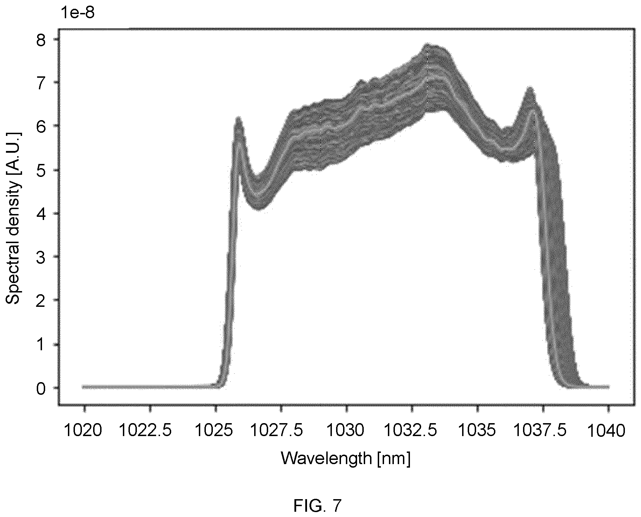

Fig. 7 shows a plot of the spectral density of a laser pulse versus the wavelength of the laser pulse. The plot shows a plurality of graphs or traces, said graphs corresponding to the observed spectral density and wavelength at different temperatures as controlled by the thermal chamber. It is observed that both the amplitude of the pulse and the spectral width (bandwidth) of the pulse changes with temperature. It is also observed that one side of the pulse changes more with temperature than the other side of the pulse. In particular, the upper end of the pulse, i.e. the higher wavelength end, changes to a greater extent than the lower end of the pulse at shorter wavelengths. Thus, it is an advantage to select an optical filter having a center wavelength around the upper range of the spectrum of the pulse. Such an optical filter has the technical effect of further stabilizing the pulse bandwidth and/or the pulse power of the laser emission. For this given example shown here, this would correspond to an optical filter having a center wavelength in the range of 1035 nm to 1040 nm, such as about 1038 nm.

### Further details of the disclosure

1. A laser system comprising:
   - a cavity comprising a gain medium configured to generate laser emission in the form of laser pulses, each having a pulse bandwidth and pulse power;
   - a pump source configured to optically pump the gain medium in the cavity;
   - a photodetector located external to the cavity, the photodetector configured to monitor the laser emission from the cavity and provide a feedback signal to the pump source; and
   - an optical filter located external to the cavity, wherein the optical filter is arranged in combination with the photodetector and configured to filter out a predefined range of wavelengths in order to stabilize one or more properties of the laser emission.
2. The laser system according to item 1, wherein the one or more properties are selected from the group of: pulse bandwidth, pulse duration, pulse power, and/or combinations thereof.
3. The laser system according to any of the preceding items, wherein the optical filter is selected from the group of: band-pass filters, long-pass filters, or short-pass filters.
4. The laser system according to any of the preceding items, wherein the optical filter is arranged between the cavity and the photodetector.
5. The laser system according to any of the preceding items, wherein the laser system is configured to change the current and/or power of the pump source based on the feedback signal in order to stabilize the power of the laser emission.
6. The laser system according to any of the preceding items, wherein the laser system comprises a proportional-integral-derivative (PID) controller arranged in a feedback loop with the photodetector and the pump source.
7. The laser system according to any of the preceding items, wherein the photodetector is selected from the group of: semiconductor diodes, photodiodes, photodiode arrays, and photomultiplier tubes.
8. The laser system according to any of the preceding items, wherein the pump source is selected from the group of: laser diodes, fiber-coupled diode lasers, or fiber lasers.
9. The laser system according to any of the preceding items, wherein the pump source is configured to emit a central wavelength in the range of 900 nm to 1000 nm, such as in the range 950 nm to 1000 nm.
10. The laser system according to any of the preceding items, wherein the optical filter has a bandwidth in the range of 1 nm to 10 nm, such as 2 nm to 6 nm, such as about 4 nm.
11. The laser system according to item 10, wherein the optical filter is configured to allow light of wavelengths within the bandwidth to be transmitted through the optical filter.
12. The laser system according to any of the preceding items, wherein the optical filter has a center wavelength in the range of 1030 nm to 1050 nm, such as about 1038 nm.
13. The laser system according to item 12, wherein the optical filter is configured to allow light having a similar wavelength as the center wavelength of the filter to pass through the filter.
14. The laser system according to any of the preceding items, wherein the cavity comprises one or more polarization-maintaining (PM) fibers.
15. The laser system according to any of the preceding items, wherein the cavity is a linear cavity and/or a fiber laser cavity.
16. The laser system according to any of the preceding items, wherein the cavity comprises a fiber Bragg grating (FBG) located at a first end of the cavity, and a semiconductor saturable-absorber mirror (SESAM) located at a second end of the cavity, opposite to the first end.
17. The laser system according to any of the preceding items, wherein the laser system further comprises a wavelength division multiplexer (WDM) arranged between the pump source and the cavity.
18. The laser system according to any of the preceding items, wherein the laser system is an ultra-fast fiber laser system for generating short laser pulses in the femtosecond or picosecond range.
19. The laser system according to item 18, wherein the laser pulses are generated by mode-locking or Q-switching.
20. The laser system according to any of the preceding items, wherein the laser emission is in the form of ultrashort pulses, such as mode-locked ultrashort pulses.
21. The laser system according to any of the preceding items, wherein the laser system is a mode locked fiber laser system.
22. The laser system according to any of the preceding items, wherein the ultrashort pulses have a pulse duration in the range of femtoseconds.
23. The laser system according to any of the preceding items, wherein the ultrashort pulses have a pulse duration from about 10 fs to about 1 ps, such as from about 50 fs to about 500 fs.
24. The laser system according to any of the preceding items, wherein the laser system is configured to output the ultrashort pulses at a pulse repetition rate from about 1 MHz to about 20 MHz.
25. The laser system according to any of the preceding items, wherein the ultrashort pulses have a spectral width in the range from about 12 nm to about 16 nm.
26. The laser system according to any of the preceding items, wherein the ultrashort pulses have a central wavelength from about 1025 nm to about 1040 nm.
27. The laser system according to any of the preceding items, wherein the gain medium comprises a rare-earth doped fiber.
28. The laser system according to any of the preceding items, wherein the gain medium comprises a rare-earth element selected from the group of: Erbium, Thulium, or Ytterbium.
29. The laser system according to any of the preceding items, wherein the laser emission has a central wavelength in the range of 1030 nm to 1120 nm.
30. The laser system according to any of the preceding items, wherein the laser emission has a central wavelength in the range of 1530 nm to 1550 nm.
31. The laser system according to any of the preceding items, wherein the laser emission has a central wavelength in the range of 2010 nm to 2080 nm.
32. The laser system according to any of the preceding items, wherein the pump source is configured to emit a central wavelength in the range of 750 nm to 800 nm, or in the range of 1700 nm to 1800 nm.

Although some embodiments have been described and shown in detail, the disclosure is not restricted to such details, but may also be embodied in other ways within the scope of the subject matter defined in the following claims. In particular, it is to be understood that other embodiments may be utilized, and structural and functional modifications may be made without departing from the scope of the present disclosure. Furthermore, the skilled person would find it apparent that unless an embodiment is specifically presented only as an alternative, different disclosed embodiments may be combined to achieve a specific implementation and such specific implementation is within the scope of the disclosure.

### Reference numerals

1. Laser cavity
2. Gain medium
3. Pump source
4. Photodetector
5. Optical filter
6. Fiber Bragg grating
7. Semiconductor saturable-absorber mirror
8. Wavelength division multiplexer
9. Optical isolator
10. Coupler
11. Coupler
12. Extension optical fiber
13. Fiber cable termination
14. Photodetector

## Claims

1. A laser system comprising:
- a cavity comprising a gain medium configured to generate laser emission in the form of laser pulses, each having a pulse bandwidth and pulse power;
- a pump source configured to optically pump the gain medium in the cavity;
- a photodetector located outside the cavity, the photodetector configured to monitor the laser emission from the cavity and provide a feedback signal to the pump source; and
- an optical filter located outside the cavity, wherein the optical filter is arranged in optical communication with the photodetector and configured to filter out a predefined range of wavelengths in order to stabilize one or more properties of the laser emission.

2. The laser system according to claim 1, wherein the optical filter is selected from the group of: band-pass filters, long-pass filters, or short-pass filters.

3. The laser system according to any of the preceding claims, wherein the optical filter is arranged between the cavity and the photodetector.

4. The laser system according to any of the preceding claims, wherein the laser system is configured to change the current and/or power of the pump source based on the feedback signal in order to stabilize one or more properties of the laser emission.

5. The laser system according to any of the preceding claims, wherein the one or more properties are selected from the group of: pulse bandwidth, pulse duration, pulse power, and/or combinations thereof.

6. The laser system according to any of the preceding claims, wherein the laser system comprises a proportional-integral-derivative (PID) controller arranged in a feedback loop with the photodetector and the pump source.

7. The laser system according to any of the preceding claims, wherein the optical filter has a bandwidth in the range of 1 nm to 10 nm.

8. The laser system according to any of the preceding claims, wherein the optical filter has a center wavelength in the range of 1030 nm to 1050 nm.

9. The laser system according to any of the preceding claims, wherein the cavity comprises one or more polarization-maintaining (PM) fibers.

10. The laser system according to any of the preceding claims, wherein the cavity is a linear cavity.

11. The laser system according to any of the preceding claims, wherein the cavity comprises a fiber Bragg grating (FBG) located at a first end of the cavity, and a semiconductor saturable-absorber mirror (SESAM) located at a second end of the cavity, opposite to the first end.

12. The laser system according to any of the preceding claims, wherein the laser system is configured for generating laser pulses in the femtosecond or picosecond range, wherein the laser pulses are generated by mode-locking or Q-switching.

13. The laser system according to any of the preceding claims, wherein the laser pulses have a pulse duration from about 10 fs to about 500 fs.

14. The laser system according to any of the preceding claims, wherein the laser system is configured to output the laser pulses at a pulse repetition rate from about 1 MHz to about 20 MHz.

15. The laser system according to any of the preceding claims, wherein the laser pulses have a spectral width in the range from about 12 nm to about 16 nm.
